# DEMANDE DE BREVET EUROPEEN

(11) **EP 0 891 705 A1**
(43) Date de publication de la demande: **20.01.1999**
(21) Numéro de dépôt: 98450010.8
(22) Date de dépôt: 17.07.1998
(51) Int. Cl.: A01K 89/08, B65H 75/40

(54) **Engin de pêche sans canne**

(30) Priorité: 17.07.1997 FR 9709306
(71) Demandeur: Nolibe, Jean-Marc, 33140 Villenave d'Ornon (FR)
(72) Inventeur: Nolibe, Jean-Marc, 33140 Villenave d'Ornon (FR)
(74) Mandataire: Thébault, Jean-Louis

(57) **Abrégé**

- L'invention concerne un nouvel engin de pêche sans canne constitué d'une poignée 1 comprenant une cavité, prolongée par un bec support de fil 3 présentant un profil concave, possédant des parois garde fil, un sillon garde fil 5 et relié à un enrouleur de fil 2.Le bec présente une forme appropriée pour permettre à l'index de tirer sans gène et d'une façon répétée sur le fil à pèche.

## Description

La présente invention a pour objet un engin de pêche non muni d'une canne. On connaît déjà des dispositifs dans le commerce constitués d'une simple planche, généralement en liège, sur laquelle on enroule une ligne de pêche.

On connaît également des produits dans le commerce constitué d'une poignée, souvent en matière plastique, qui sert d'enrouleur de fil. On connaît aussi un document FR 93 13553 décrivant un engin de pêche sans canne muni d'un système de blocage de fil et d'un emplacement pour fixer les pointes des hameçons.

Tous ces dispositifs présentent l'inconvénient d'offrir une préhension peu ergonomique en situation de pêche, surtout lors d'une prise, d'avoir un système de blocage de fil peu fonctionnel nécessitant, à chaque fois, l'intervention de l'opérateur pour débloquer le fil, et surtout de ne pas disposer d'un dispositif permettant au pêcheur de dandiner la ligne d'une façon permanente et sans effort. On entend par dandiner, la création d'un mouvement oscillatoire, généralement vertical, sur une course réduite du fil.

Par ailleurs, ces dispositifs présentent également l'inconvénient de ne pas être conçu pour sentir instantanément, à travers le contact permanent de l'index avec le fil, le poisson mordre à l `hameçon en vue de pouvoir le férer efficacement.

La présente invention vise à proposer un nouvel engin de pêche sans canne muni d'une poignée beaucoup plus ergonomique et fonctionnelle que les systèmes vus aujourd'hui dans le commerce ou dans un brevet et dont le principe de conception va permettre à l'utilisateur, de dandiner la ligne en permanence sans effort, de sentir les moindres tensions du fil provoquées et ainsi de ferrer efficacement au moment le plus opportun.

À cet effet, l'invention a pour objet un engin de pêche très simple, qui possède un encombrement minimum, qui est composé d'une poignée avec bobine intégrée prolongée par un bec et qui offre un espace de rangement fermé pour toute la ligne de pêche à l'intérieur de la poignée.

Les figures présentées en annexe décrivent un mode de réalisation préférentiel.
La figure 1 est une vue de profil de l'engin de pêche.

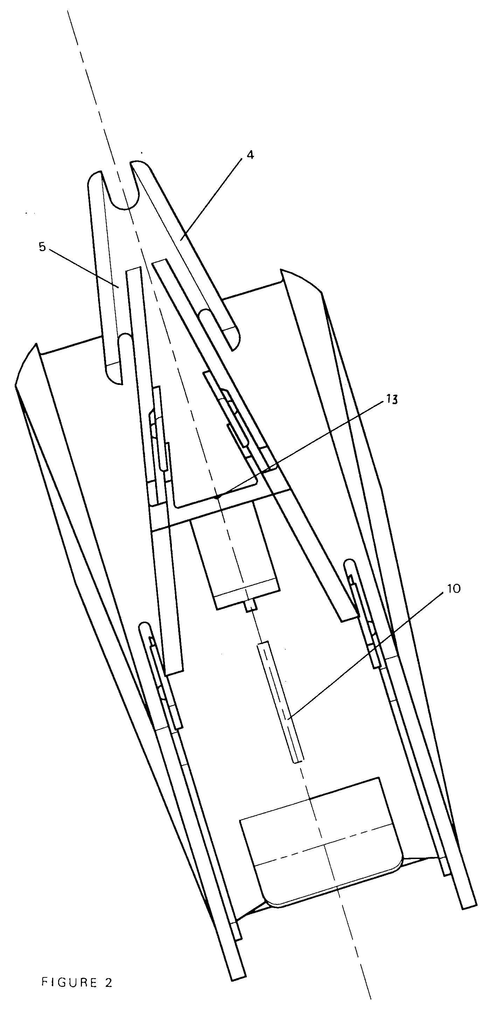

La figure 2 est une vue du dessus de l'engin de pêche.

L'engin se compose d'une poignée 1 prolongée par un bec support de fil 3 et reliée à un enrouleur de fil 2.

Le bec support de fil 3 dispose à son extrémité et sur chacun de ses côtés, d'une paroi garde fil 4 d'une hauteur suffisante pour empêcher toute sortie intempestive du fil lors des manipulations de l'engin en situation de pêche. Un sillon guide fil 5 à la base des parois permet d'obtenir une position choisie du fil.

Le corps du bec 6 présente un profil courbe concave et une forme adaptée pour permettre l'enroulement du fil autour de l'enrouleur sans être gêné par le bec 3.

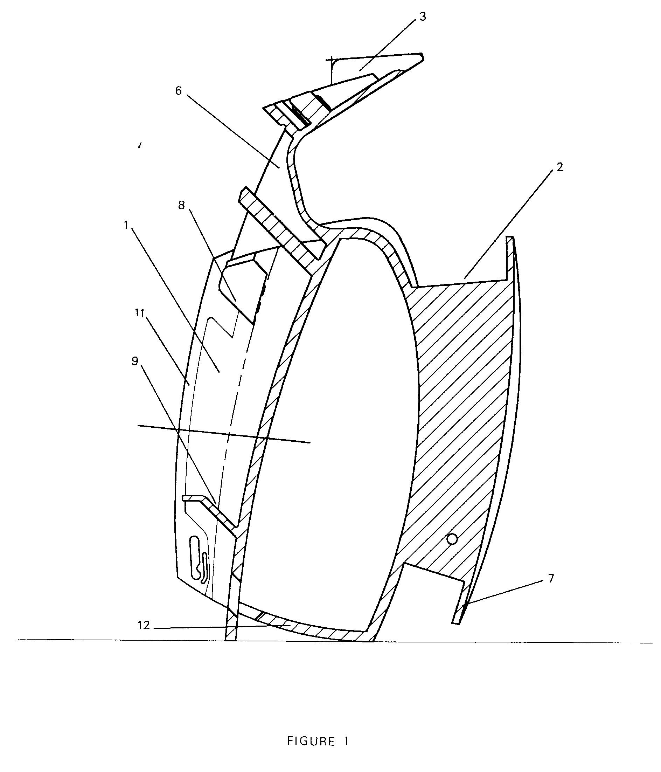

L'enrouleur de fil 2 est constitué sur son extérieur d'un rebord 7 d'une hauteur suffisante pour éviter la sortie du fil lors de son enroulement. L'enrouleur 2 possède une paroi en forme de biseau comme indiquée sur la figure 1 afin de favoriser la descente du fil vers la base de l'enrouleur.

La poignée 1, de forme ergonomique, possède une cavité sur toute sa longueur. Dans cette cavité se trouvent, un système de blocage du fil 8, une plaque en mousse rigide de fixation des hameçons 10 et un support de retenue du plomb 9. Le système de blocage du fil 8 et le support de retenue du plomb 9 sont placés de telle sorte qu'ils ne gênent pas l'enroulement du fil autour de la plaque en mousse rigide.

L'accès à la cavité est permis grâce à la présence d'un couvercle 11 placé sur le dos de la poignée 1 et prenant toute la longueur.

Le couvercle 11 s'ouvrira et se fermera au moyen d'un clip ou par toute autre système présentant une fonctionnalité équivalente. Par commodité, l'axe d'ouverture ou de fermeture du couvercle 11 sera placé côté socle 12.

Un orifice 13, placé à proximité de la base du corps de bec, permet de loger le fil sans le coincer lorsque le couvercle 11 est en position fermée.

L'engin de pêche est avantageusement réalisé par moulage d'une matière plastique appropriée.

## Revendications

1. Engin de pêche non muni d'une canne, caractérisé en ce qu'il comprend une poignée fermée 1, un enrouleur de fil 2 et un bec support de fil 3.

2. Engin de pêche non muni d'une canne suivant la revendication 1, caractérisé en ce que le bec support de fil 3 présente un profil courbe concave et possède à son extrémité, sur chaque côté, une paroi garde fil 4 et un sillon garde fil 5.

3. Engin de pêche non muni d'une canne suivant les revendications 1 et 2, caractérisé en ce que les parois garde fil 4 soient d'une position et d'une longueur appropriées pour permettre l'index de tirer sans gêne et d'une façon répétée sur le fil à pèche.

4. Engin de pêche non muni d'une canne suivant les revendications 1 à 3, caractérisé en ce que les parois garde fil 4 soient d'une hauteur appropriée pour éviter toute sortie intempestive du fil lors d'une prise tout en permettant cependant la sortie du fil du bec 3 lors d'une action orientée de la main opérante.

5. Engin de pêche non muni d'une canne suivant la revendication 1, caractérisé en ce que la poignée 1 possède une cavité sur toute sa longueur fermée à l'aide d'un couvercle 11.

6. Engin de pêche non muni d'une canne suivant les revendications 1 et 5, caractérisé en ce que la cavité comprend un système de blocage du fil 8, une plaque en mousse rigide 10 pour enrouler le fil et fixer les hameçons et un support de retenue du plomb 9.

7. Engin de pêche non muni d'une canne suivant la revendication 1, caractérisé en ce que l'enrouleur de fil 2 soit d'une forme elliptique dont les bords extérieurs 7 sont d'une hauteur suffisante pour éviter tout déroulement non volontaire du fil et dont la paroi possède un profil en biseau.
